# EUROPÄISCHE PATENTSCHRIFT

(11) **EP 2 153 754 B1**
(45) Veröffentlichungstag und Bekanntmachung des Hinweises auf die Patenterteilung: **29.12.2010**
(21) Anmeldenummer: 09009872.4
(22) Anmeldetag: 30.07.2009
(51) Int. Cl.: A47C 7/40, F16B 12/40, F16B 12/42, A47C 5/04

(54) **Stuhl**
Chair
Chaise

(30) Priorität: 12.08.2008 DE 102008038703
(43) Veröffentlichungstag der Anmeldung: 17.02.2010
(73) Patentinhaber: Sedus Stoll AG, 79761 Waldshut-Tiengen (DE)
(72) Erfinder: Donner, Siegfried, 79761 Waldshut (DE); Buntru, Kurt, 79780 Stühlingen/Eberfingen (DE); Dörner, Markus, 79855 Efringen-Kirchen (DE); Habermann, Jutta, 79787 Oberlauchringen (DE)
(74) Vertreter: Lauer, Joachim

(56) Entgegenhaltungen:
- EP-A- 0 835 619
- FR-A- 2 437 809
- US-A- 4 269 532
- US-A- 4 615 636

## Beschreibung

### TECHNISCHES GEBIET

Die vorliegende Erfindung betrifft einen Stuhl mit Rückenlehne, wobei die Rückenlehne zwei untere, nach unten durch Hinterbeine des Stuhls fortgesetzte rohrförmige Teile aufweist, welche mit einem oberen Teil der Rückenlehne durch Anschrauben verbunden sind und wobei die dazu verwendeten Schrauben von unten durch die rohrförmigen Teile hindurch in den oberen Teil der Rückenlehne eingedreht sind.

### STAND DER TECHNIK

Aus EP 0835 619 ist ein solcher Stuhl bekannt, wobei die zur Verbindung der rohrförmigen Teile mit dem oberen Teil der Rückenlehne verwendeten "Schrauben" gleichzeitig die Hinterbeine des Stuhls bilden und eine sich über die Länge der rohrförmigen Teile erstreckende, dünnere, mit dem Schraubgewinde versehene Steckpartie und eine sich über die Länge der Hinterbeine erstreckende dickere Stangenpartie als "Schraubenkopf' aufweisen. Mit einer Aufsetzschulter am Übergang zwischen der Stangen-und der Steckpartie stützen sich die "Schrauben" an der Unterkante der rohrförmigen Teile ab. Die Vorderbeine sind entsprechend ausgebildet und befestigt. Durch diese Ausbildung lassen sich die Beine des bekannten Stuhls insgesamt leicht entfernen und der Stuhl dadurch einfach zerlegen, was auch Ziel der Konstruktion ist. Die rohrförmigen Teile sowie zumindest die durch sie hindurchgesteckten Steckpartien sind allerdings notwendigerweise gerade ausgebildet, was sich auf die Gestaltung des Stuhls einschränkend auswirkt. Für den optischen Eindruck charakterisch ist auch die Tatsache, dass es sich bei den rohrförmigen Teilen und den Stuhlbeinen um separate Teile handelt.

### DARSTELLUNG DER ERFINDUNG

Aufgabe der Erfindung ist es, einen Stuhl der eingangs genannten Art anzugeben, der diesen Einschränkungen nicht unterliegt und der originell und ungewöhlich gestaltet ist. Gelöst wird diese Aufgabe durch einen Stuhl gemäss dem Patentanspruch 1,

Der erfindungsgemässe Stuhl ist demnach dadurch gekennzeichnet, dass die rohrförmigen Teile durch gekrümmte Abschnitte in Richtung aufeinander zu gekrümmt sind, dass die Schrauben von aussen nicht sichtbar sind und sich an Anschlägen in den rohrförmigen Teilen oberhalb der gekrümmten Abschnitte abstützen.

Bevorzugte Ausführungen des erfindungsgemässen Stuhls sind in den abhängigen Ansprüchen gekennzeichnet.

Danach sind auch die Hinterbeine rohrförmig und bilden mit den rohrförmigen Teilen jeweils ein durchgehendes, insbesondere einstückiges Rohr.

Die Anschläge in den rohrförmigen Teilen sind bevorzugt durch in diesen befestigte Ronden gebildet.

Zum Eindrehen und zur stabilen Halterung der Schrauben sind im oberen Teil der Rückenlehne vorzugsweise Gewindehülsen aufgenommen.

Zur Erzielung einer besonders ansprechenden und originellen Gestaltung kann der obere Teil der Rückenlehne einen Lehnenrahmen mit sich überkreuzenden Streben und mit einem oberen Querholm bilden, wobei die Streben mit den rohrförmigen Teilen durch die Schrauben auf Stoss verbunden sind. Die Stossverbindung sollte hierbei im wesentlichen ohne gegenseitigen Eingriff der Streben und der rohrförmigen Teile ausgeführt sein.

Weiter bevorzugt ist der Lehnenrahmen ein einstückiges Kunststoff-Spritzgussteil.

An dem Lehnenrahmen der Rückenlehne kann eine Polsterplatte befestigt sein.

### KURZE ERLÄUTERUNG DER FIGUREN

Die Erfindung soll nachfolgend anhand eines Ausführungsbeispiels im Zusammenhang mit der Zeichnung näher erläutert werden. Es zeigen:
- Fig. 1: einen erfindungsgemässen Stuhl in Seitenansicht;
- Fig. 2: das tragende Gestell des Stuhls in Rückansicht; und
- Fig. 3: einen Schnitt durch ein Hinterbein des Stuhles.

### WEGE ZUR AUSFÜHRUNG DER ERFINDUNG

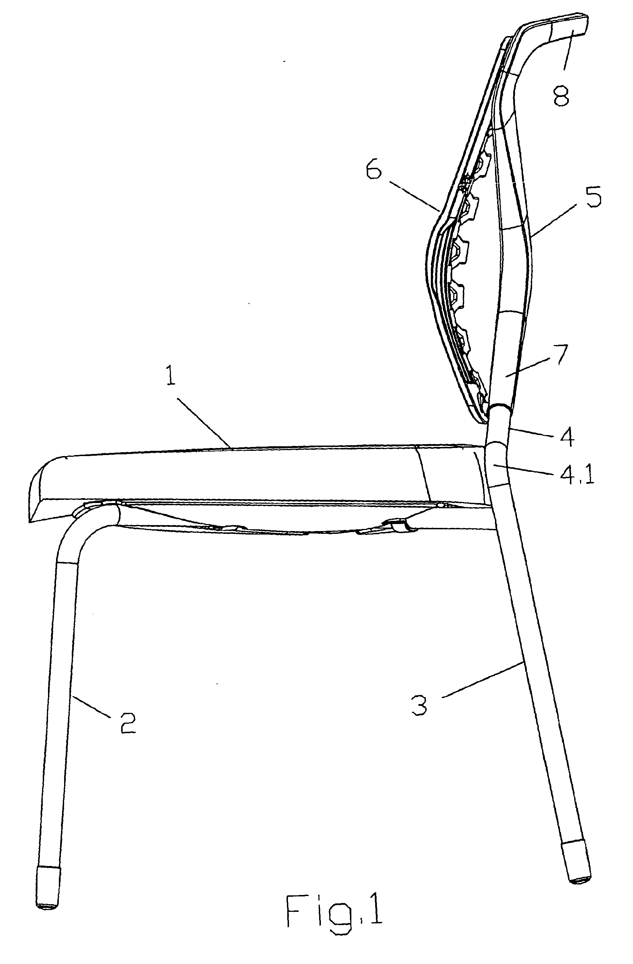

Der in den Figur 1 dargestellte Stuhl weist vier rohrförmige Beine aus einem metallischen Material auf, wobei die Vorderbeine 2 in ihrem oberen Bereich nach hinten abgebogen sind, unter dem Sitz 1 nach hinten bis zu den Hinterbeinen 3 verlaufen und dort mit diesen verbunden sind. Die Hinterbeine 3 sind über die Anschlusshöhe der Vorderbeine 2 und die Höhe des Sitzes 1 hinaus nach oben hochgezogen und bilden mit ihren hochgezogenen, den Sitz überragenden Teilen 4 den unteren Teil der Rückenlehne, deren oberer Teil mit 5 bezeichnet ist. An dem oberen Teil 5 der Rückenlehne ist eine Polsterplatte 6 befestigt, von der allerdings nur das Stützgerüst und nicht die eigentliche, darüber liegende Polsterung dargestellt ist.

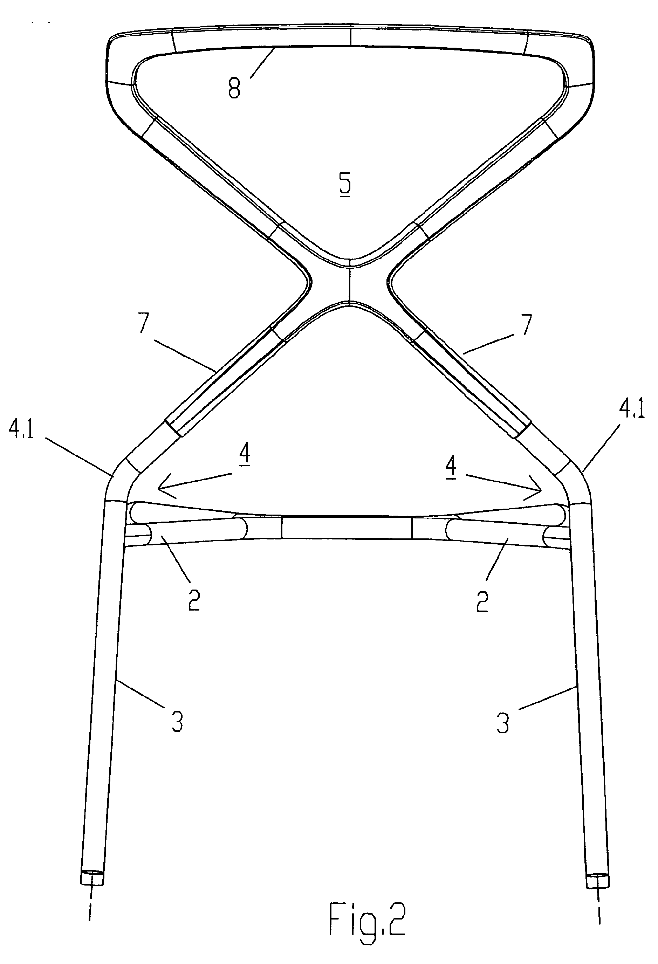

Die hochgezogenen Teile 4 der Hinterbeine 3 weisen jeweils einen gekrümmten Abschnitt 4.1 auf und sind in Richtung aufeinander zu gekrümmt, wie dies in Fig. 2 gut zu erkennen ist. In Fig. 2 sind der Sitz 1 und die Polsterplatte 6 weggelassen.

Die obere Teil 5 der Rückenlehne bildet einen Lehnenrahmen mit sich überkreuzenden Streben 7 und einem oberen Querholm 8, wobei dieser Lehnenrahmen 5 als einstückges Kunststoff-Spritzgussteil hergestellt ist.

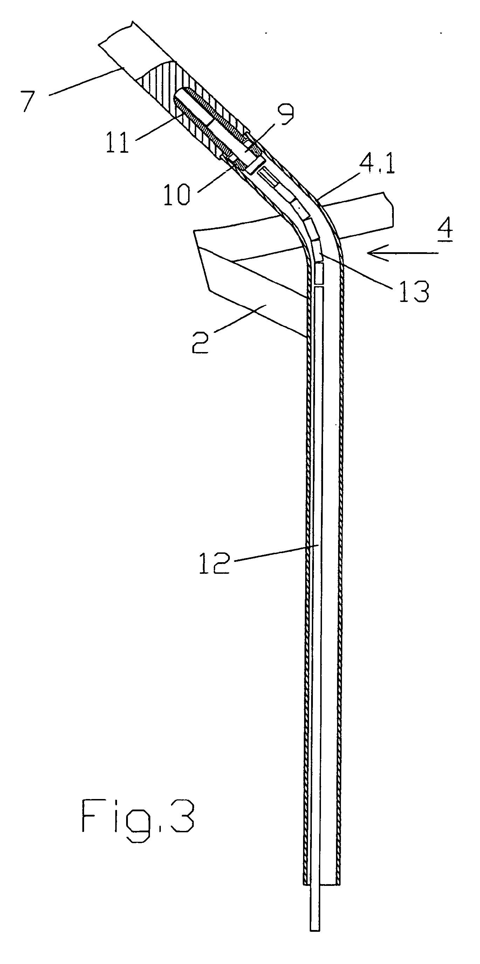

Mit den beiden hochgezogenen Teilen 4 der Hinterbeine 3 sind die Streben 7 auf Stoss verbunden, wobei die Verbindung mittels Schrauben 9 hergestellt ist, wie dies anhand von Fig. 3 erläutert wird.

Im Innern der Hinterbeine 3, im Bereich von deren freien Enden. oberhalb der gekrümmten Abschnitte 4.1 sind Ronden 10 vorzugsweise schweisstechnisch befestigt, die als Anschlag bzw. Widerlager für den Kopf der Schrauben 9 dienen. Die Schrauben 9 sind von unten durch die Ronden 10 durchgesteckt und in den Streben 7 des Lehnenrahmens 5 in dort aufgenommene und verankerte Schraubhülsen 11 eingedreht. Durch diese Ausbildung sind die Schrauben 9 von aussen nicht sichtbar.

Die Verbindung zwischen den Hinterbeinen 3 und den Streben 7 des Lehnenrahmens 5 ist im wesentlichen ohne gegenseitigen Eingriff dieser Teile ineinander sowie beispielsweise auch ohne einen vormontierten Haltedom ausgeführt, da wegen der beschriebenen Formgebung der Lehnenrahmen 5 zwischen den gegeneinander gekrümmten Teilen 4 der Hinterbeine 3 anders gar nicht montierbar wäre. Soweit die Teile 4 und 7 einen gewissen, in Fig. 3 gerade noch erkennbaren gegenseitigen Eingriff aufweisen, darf sich dieser nur im Rahmen ihrer elastischen Verformbarkeit bewegen.

Die Schrauben 9 können dadurch erst durch die Ronden 10 bzw. über diese hinaus gesteckt werden, wenn der Lehnenrahmen 5 zwischen den Teilen des 4 der Hinterbeine 3 bereits eingefügt ist. Dies ist durch die Hinterbeine 3 hindurch jedoch möglich, indem man die Schrauben 9 bei auf den Kopf gestellem Stuhl in die Hinterbeine 3 hineinfallen lässt. Damit die Schrauben 9 die gekrümmten Abschnitte 4.1 durchfallen können, dürfen sie natürlich nicht zu lang sein. Angezogen werden die Schrauben 9 schliesslich ebenfalls durch die Hinterbeine 3 hindurch mit einem ausreichend langen Schraubendreher 12, der über einen beweglichen Abschnitt 13 aus beispielsweise mehreren kardanisch miteinander verbundenen Kettengliedern verfügt.

### BEZEICHNUNGSLISTE

- 1: Sitz
- 2: Vorderbeine
- 3: Hinterbeine
- 4: den Sitz überragenden Teile
- 4.1 1: gekrümmte Abschnitte der Teile 4
- 5: oberer Teil der Rückenlehne / Lehnenrahmen
- 6: Polsterplatte
- 7: Streben
- 8: Querholm
- 9: Schrauben
- 10: Ronden
- 11: Schraubhülsen
- 12: langer Schraubendreher
- 13: beweglicher Abschnitt des Schraubendrehers

## Patentansprüche

1. Stuhl mit Rückenlehne (4 -7), wobei die Rückenlehne zwei untere, nach unten durch Hinterbeine (3) des Stuhls fortgesetzte rohrförmige Teile (4) aufweist, welche mit einem oberen Teil (5) der Rückenlehne durch Anschrauben verbunden sind und wobei die dazu verwendeten Schrauben (9) von unten durch die rohrförmigen Teile (4) hindurch in den oberen Teil der Rückenlehne (5) eingedreht sind, **dadurch gekennzeichnet, dass** die rohrförmigen Teile (4) durch gekrümmte Abschnitte (4.1) in Richtung aufeinander zu gekrümmt sind, dass die Schrauben (9) von aussen nicht sichtbar sind und sich an Anschlägen in den rohrförmigen Teilen (4) oberhalb der gekrümmten Abschnitte (4.1) abstützen.

2. Stuhl nach Anspruch 1, **dadurch gekennzeichnet, dass** auch die Hinterbeine (3) rohrförmig und sind mit den rohrförmigen Teilen (4) jeweils ein durchgehendes Rohr bilden.

3. Stuhl nach Anspruch 1 oder 2, **dadurch gekennzeichnet, dass** die Anschläge in den rohrförmigen Teilen (4) durch in diesen befestigte Ronden (10) gebildet sind.

4. Stuhl nach Anspruch 1-3, **dadurch gekennzeichnet, dass** im oberen Teil (5) der Rückenlehne Gewindehülsen (11) zum Eindrehen der Schrauben (9) aufgenommen sind.

5. Stuhl nach einem der Ansprüche 1-4, **dadurch gekennzeichnet, dass** der obere Teil (5) der Rückenlehne einen Lehnenrahmen mit sich überkreuzenden Streben (7) und einem oberen Querholm (8) bildet, wobei die Streben (7) mit den rohrförmigen Teilen (4) durch die Schrauben (9) auf Stoss verbunden sind.

6. Stuhl nach Anspruch 5, **dadurch gekennzeichnet, dass** die Stossverbindung im wesentlichen ohne gegenseitgen Eingriff der Streben (7) und der rohrförmigen Teile (4) ausgeführt ist.

7. Stuhl nach einem der Ansprüche 5 oder 6, **dadurch gekennzeichnet, dass** der Lehnenrahmen (5) ein einstückiges Kunststoff-Spritzgussteil ist.

8. Stuhl nach einem der Ansprüche 5-7, **dadurch gekennzeichnet, dass** eine Polsterplatte (6) der Rückenlehne an dem Lehnenrahmen (5) befestigt ist.

## Claims

1. Chair with backrest (4-7), with the backrest having two lower tubular parts (4) continuing downwards through rear legs (3) of the chair, which tubular parts are connected to an upper part (5) of the backrest by means of screwing, and with the screws (9) used for this being screwed in from below through the tubular parts (4) into the upper part of the backrest (5), **characterised in that** the tubular parts (4) are bent towards each other by means of bent sections (4.1), and **in that** the screws (9) are not visible from the outside and are supported on stops in the tubular parts (4) above the bent sections (4.1).

2. Chair according to claim 1, **characterised in that** the rear legs (3) are also tubular and each forms a continuous tube with the tubular parts (4).

3. Chair according to claim 1 or 2, **characterised in that** the stops in the tubular parts (4) are formed by means of round blanks (10) fastened in these parts.

4. Chair according to claims 1 to 3, **characterised in that** screw collars (11) for screwing in the screws (9) are incorporated in the upper part (5) of the backrest.

5. Chair according to one of claims 1 to 4, **characterised in that** the upper part (5) of the backrest forms a backrest frame with intersecting braces (7) and an upper cross strut (8), with the braces (7) being connected to the tubular parts (4) by means of the screws (9) in an abutting manner.

6. Chair according to claim 5, **characterised in that** the butt joint is largely executed without mutual engagement of the braces (7) and the tubular parts (4).

7. Chair according to one of claims 5 or 6, **characterised in that** the backrest frame (5) is a single-piece plastic injection-moulded part.

8. Chair according to one of claims 5 to 7, **characterised in that** a padded panel (6) of the backrest is fastened to the backrest frame (5).

## Revendications

1. Siège avec dossier (4-7), dans lequel le dossier présente deux pièces (4) tubulaires inférieures se prolongeant vers le bas par des pieds arrières (3), lesquelles sont reliées par des vis à une partie supérieure (5) du dossier et dans lequel les vis (9) utilisées pour cela sont vissées dans la pièce supérieure du dossier (5) depuis le bas à travers les pièces tubulaires (4), **caractérisé en ce que** les pièces tubulaires (4) sont recourbées l'une vers l'autre grâce à des portions coudées (4.1), **en ce que** les vis (9) ne sont pas visibles de l'extérieur et s'appuient sur des butées dans les pièces tubulaires (4) au dessus des portions coudées (4.1).

2. Siège selon la revendication 1, **caractérisé en ce que** les pieds arrières (3) sont aussi tubulaires et constituent chacun un tube traversant avec les pièces tubulaires (4).

3. Siège selon l'une des revendications 1 ou 2, **caractérisé en ce que** les butées dans les pièces tubulaires (4) sont réalisées par des rondelles fixées à l'intérieur de celles-ci.

4. Siège selon l'une des revendications 1 à 3, **caractérisé en ce que** des douilles filetées (11) sont logées dans la partie supérieure (5) du dossier pour la mise en place des vis (9).

5. Siège selon l'une des revendications 1 à 4, **caractérisé en ce que** la partie supérieure (5) du dossier forme avec un longeron transversal (8) et des montants entrecroisés (7) un cadre de dossier, dans lequel les montants (7) sont reliés en bout à bout avec les pièces tubulaires (4) par les vis (9).

6. Siège selon la revendication 5, **caractérisé en ce que** la liaison en bout à bout est mise en place sans intervention importante du côté opposé des montants (7) et des pièces tubulaires (4).

7. Siège selon l'une des revendications 5 ou 6, **caractérisé en ce que** le cadre de dossier (5) est une pièce plastique moulée par injection d'un seul tenant.

8. Siège selon l'une des revendications 5 à 7, **caractérisé en ce qu'une** plaque de rembourrage (6) du dossier est fixée sur le cadre de dossier (5).
